# EUROPEAN PATENT SPECIFICATION

(11) **EP 2 804 465 B1**
(45) Date of publication and mention of the grant of the patent: **02.05.2018**
(21) Application number: 13706663.5
(22) Date of filing: 18.01.2013
(51) Int. Cl.: A01F 29/00, A01K 5/00

(54) **BALE HANDLING APPARATUS**
BALLENHANDHABUNGSGERÄT
DISPOSITIF DE MANUTENTION DE BALLES

(30) Priority: 18.01.2012 GB 201200867
(43) Date of publication of application: 26.11.2014
(73) Proprietor: Spread-A-Bale Limited, Chester CH3 5LJ (GB)
(72) Inventor: HUGHES, Michael, Vicars Cross, Chester CH3 5LJ (GB)
(74) Representative: Wilson Gunn
(86) International application number: PCT/GB2013/000019
(87) International publication number: WO 2013/108005

(56) References cited:
- EP-A1- 0 219 904
- WO-A1-98/15168
- AU-B2- 548 889
- FR-A1- 2 765 773
- FR-A1- 2 865 346
- US-A1- 2006 086 849

## Description

### BACKGROUND TO THE INVENTION

### 1. FIELD OF THE INVENTION

The present invention relates to an agricultural apparatus used to distribute elements of a bale (such as a straw bale, for example) typically, though not exclusively, for the purpose of spreading the straw on the ground.

### 2. DESCRIPTION OF RELATED ART

Such apparatuses are known *per se.* One example of such an apparatus is disclosed in EP 0944300 which discloses a bale-spreading apparatus that may be mounted to a tractor or other agricultural vehicle via an extended, hydraulically-operated arm, known as a loader. FR2765773 discloses an agricultural machine for shredding straw, comprising a crate and a conveyor belt formed from two endless chains to drive the straw towards a shredder.

There is a need to provide an alternative apparatus enabling, inter alia, mounting of the apparatus in such a manner that the bale can be spread laterally to the direction of tractor movement.

### SUMMARY OF THE INVENTION

The present invention provides a bale handling apparatus having: a box frame which retains a bale of material; a conveyor surface provided by a continuous conveyor belt, mounted on the box frame and upon which the bale rests, the conveyor belt being operable to move the bale in a longitudinal direction towards a spreader head that ejects bale material from the apparatus; the conveyor belt extending around at least two rollers spaced apart in the longitudinal direction; characterised in that: (a) the apparatus further comprises a rectangular frame located on the side of the apparatus by means of which the apparatus may be connected to a loader and a pair of horizontal support struts forming part of the box frame and extending in a lateral direction at the base of the box frame, the support struts providing additional strength for the apparatus to be carried transversely by the loader, and the support struts extending parallel to the rollers and inside the continuum of the conveyor belt; and (b) a sequence of guide rollers are provided within the continuum of the conveyor belt.

### BRIEF DESCRIPTION OF DRAWINGS

Embodiments of the present invention will now be described, by way of example, and with reference to the accompanying drawings, in which:
Fig. 1 is a perspective view of a bale-handling apparatus according to an embodiment of the present invention;
Fig. 2 is a side view along A-A in Fig. 1:
Fig. 3 is a cross sectional side through the apparatus viewed from the reverse angle of Fig. 2;
Fig. 4 is a side view on B-B in Fig. 1;
Fig. 5 is a detail of Fig. 4

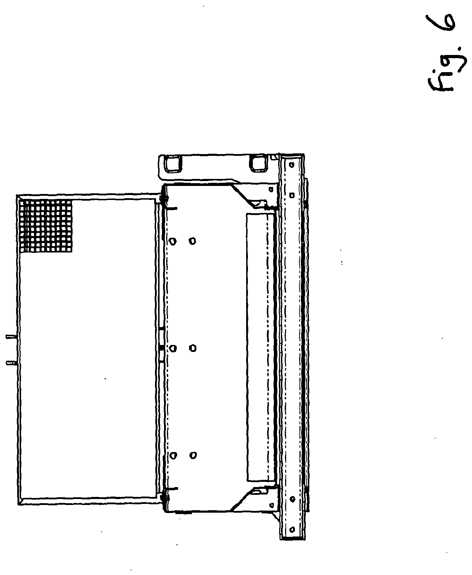

Fig. 6 is the reverse side view of Fig. 4;
Fig. 7 is a perspective view of a detail of Fig.1; and
Fig. 8 is a perspective view of a cutaway detail of Fig. 7.

### DESCRIPTION OF PREFERRED EMBODIMENTS

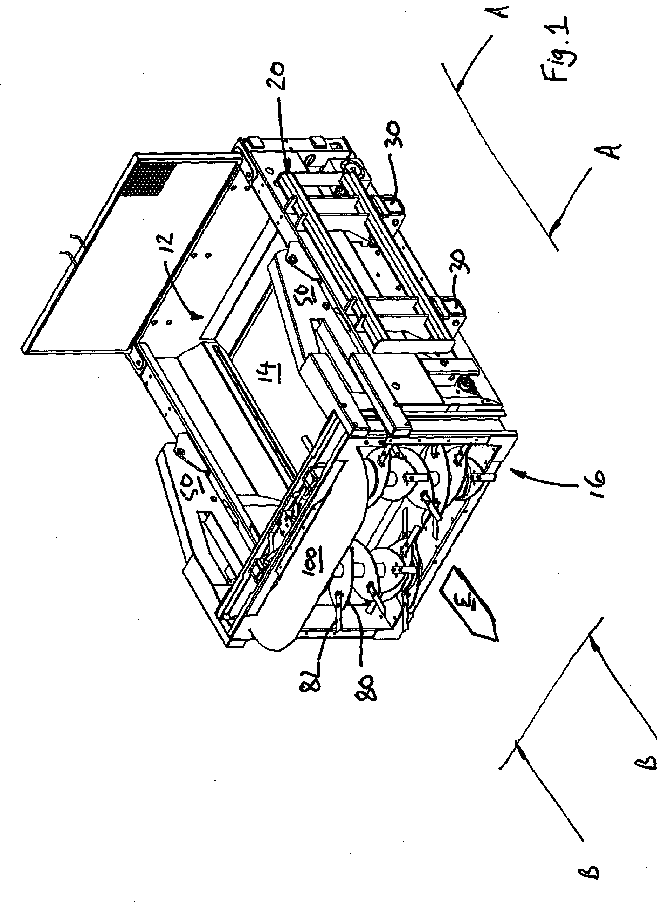

Referring now to Fig. 1, a bale-handling apparatus which, in the present embodiment is an apparatus for spreading bale material, has a generally rectangular, box-like shape. In use, a bale of material such as straw is inserted into the box area 12, whereupon a conveyor belt 14 upon which the bale sits urges the bale against a bale spreader head 16. Rotors of the spreader head 16 transform the bale into pieces at the same time as throwing these pieces out of the apparatus in the direction of arrow E in Fig. 1, thereby to provide a straw carpet which can be useful for animal bedding, or absorbing moisture on muddy ground, for example. The apparatus is carried upon the extended loading arm of a tractor, for example, known as a loader. Connection of the apparatus to the loader is by means of a rectangular frame 20 located on the side of the apparatus, while power for the various motors operating the conveyor belt 14 and rotors 16 is provided hydraulically, via the loader arm, from the tractor.

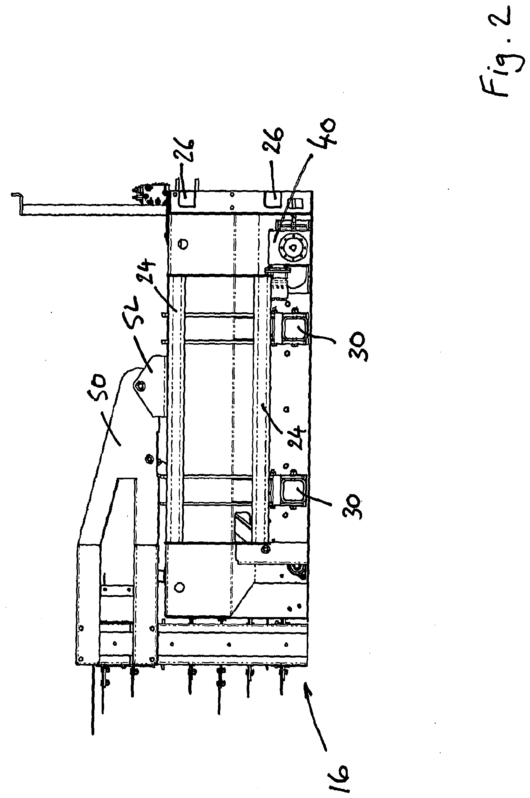

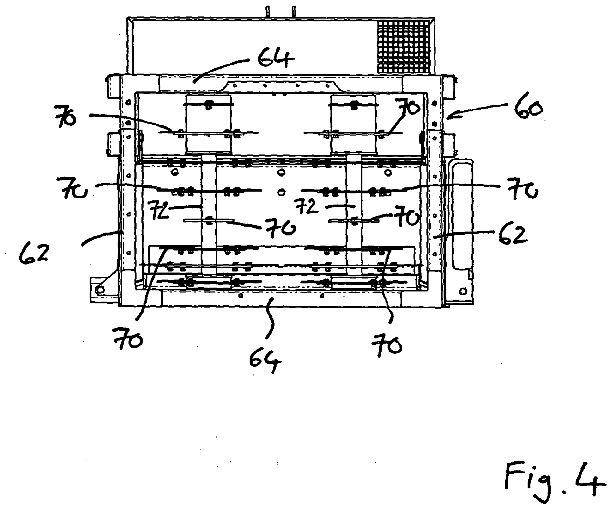

Referring now additionally to Figs. 2 to 4, the apparatus is given structural integrity by a combination of formed sheet metal webs and steel struts. The basic structural chassis or frame of the apparatus comprises, in the present embodiment, two pairs (one pair on each longitudinal side) of, parallel horizontal struts 24 extending along the longitudinal (i.e. the longest) sides of the rectangular box. The struts of the two longitudinal pairs are each interconnected at one end (the right hand end in Fig. 2) to two parallel, horizontally-extending lateral struts 26. The other ends of the longitudinal struts 24 is the end of the apparatus adjacent the spreader head 16 and two further such lateral struts interconnect the other ends of the longitudinal struts 24 though these are not shown in the drawings. The longitudinal and lateral struts 24, 26 (including those lateral struts not illustrated) define a basic box chassis. This box chassis is given additional structural strength, particularly against torsional loads, by means of sheet metal webs extending at various points between the pairs of struts 24 and 26. Two additional, horizontal strengthening support struts 30 extend in the lateral direction at the base of the box. These provide additional strength which is required for the apparatus to be carried by the loader transversely (that is to say in such a way that the spreader head operates to eject straw to the side of the loader rather than to the front). In a modification, the support struts 30 may be replaced with struts whose purpose is to provide structural stability, whereby the frame 20 may then be mounted by means of straps (for example of stainless steel) resulting in a lower overall weight.

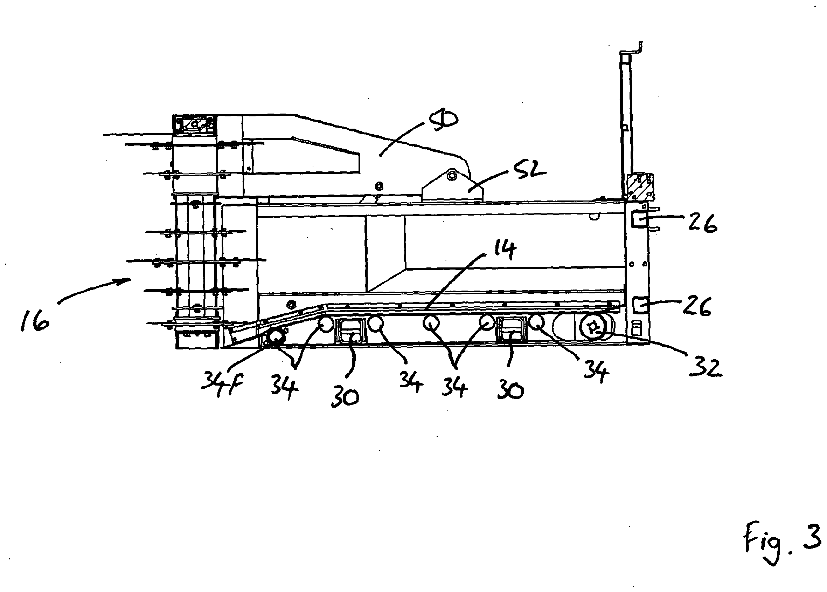

A conveyor belt 14 is located at the base of the box so that it effectively extends around the horizontal support struts 30. This configuration enables strengthening of the base of the apparatus at the same time as avoiding an increase to any significant degree in the height (and therefore weight) of the box. The conveyor belt, illustrated in section in Fig. 3, extends around a principal drive roller 32 located at one end of the box, and then over a sequence of guide rollers 34 which are journalled for rotation relative to the lower longitudinal struts 24. These additional support rollers ensure that no bales become 'stranded' as a result of insufficient contact with the conveyor belt; a difficulty which may more likely otherwise occur with round bales. In a modification of the illustrated design, brushes may be mounted to the apparatus to prevent extraneous material from falling into the space adjacent the rollers and potentially causing an obstruction to the motion of the belt 14.

The end of the conveyor belt adjacent the spreader head 16 is effectively chamfered by location of the final guide roller 34F below the height of the others. This facilitates easy loading of a bale into the box simply by movement of the tractor to 'scoop' a bale up from a stack of bales, known as 'self loading'. In addition, the slope provided by the chamfering reduces the likelihood of quadrant bale wafers falling backwards away from the spreader head 16, which would otherwise slow down spreading of rectangular bales.

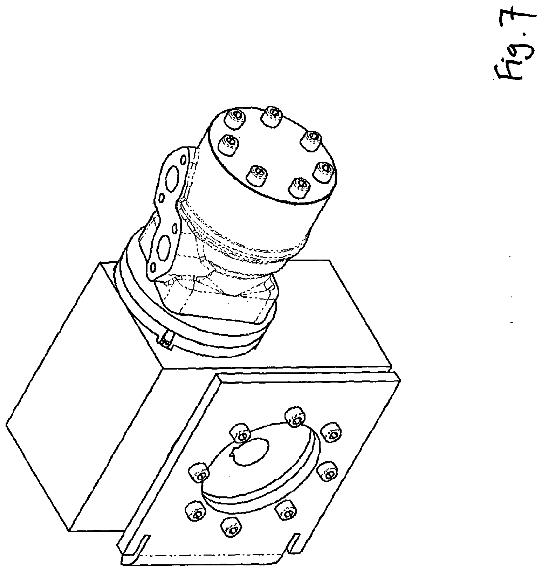

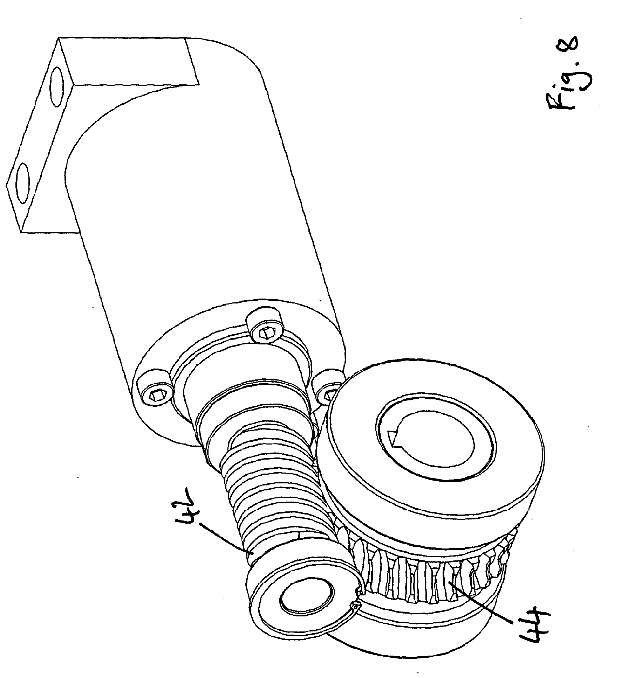

Referring to Fig. 2, the principal drive roller 32 for the belt 14 is adjustable laterally to enable adjustment of the tension in the conveyor belt 14; notably, the drive roller 32 has a larger diameter than all of the other rollers, this providing a larger contact area with the belt and providing more reliable, efficient drive thereof. The roller 32 is driven by means of a hydraulically-powered motor and reduction gearbox 40. This is shown in detail in Fig. 7 and in cutaway form in Fig. 8. The motor worm 42 meshes with a gear 44 of the gearbox whose drive shaft then drives the principal roller 32; the arrangement being encased to avoid jamming of the gears due to contamination. Preferably, the bevel gear shaft 44 also provides the journal bearing for the drive roller 32. This permits the use of a smaller hydraulic displacement motor which operates at a higher and more efficient speed.

Referring specifically to Figs 1, 3 and 4, the spreader head 16 is mounted upon a pair of forked lifting arms 50, each pivotally mounted upon an upper longitudinal strut 24 via a bracket 52. The forked ends of the lifting arms carry the frame 60 of the spreader head 16; the frame 60 comprising pairs of vertical and lateral frame struts 62, 64 respectively. The lifting arms 50 are preferably made of folded sheet metal, which enables good structural strength whilst simultaneously reducing weight. The spreader rotors 70 are carried upon rotor shafts 72, each journalled at its ends in the lateral frame struts for rotation relative to the spreader head frame 60. Elevation of the lifting arms 50 (this is done by a hydraulic actuating mechanism - not shown - and powered from the tractor hydraulic system) therefore results in a corresponding elevation of the entire spreader head 16 (that is to say the frame and the rotor shafts 72). This elevation takes place to enable loading of a new bale into the box defined by the chassis (and described above).

It will be noted that the lifting arms are mounted upon the upper part of the longitudinal struts 24. This enables closer coupling of the apparatus to the loader by means of the frame 20, since no clearance has to be accounted for. Alternative embodiments with side mounting of the lifting arms is possible.

The rotors 70 are concentrically mounted upon the rotor shafts 72 (see Figs 1, 3 and 4, for example) and comprise planar, elliptical blade holders 80, preferably manufactured from hardened steel, upon which are carried individual tines or blades 82. In the illustrated embodiment these blades are uniformly planar. In an alternative embodiment, the ends of the blades are twisted about an axis longitudinal with respect to the blade; although this increases the resistance to motion of the blade end (as a result of air resistance, amongst other things) it provides, under certain circumstances, improved performance of the spreader head 16. The degree of twist as measured at the blade tip may be between 20 and 90 degrees, examples including 30, 45, 60, 70 and 90 degrees. A further kind of blade, not illustrated, which may be useful for distributing frozen bales for example, has a body which has little or no twist and extends at 90 degrees from or close to the point of its mounting.

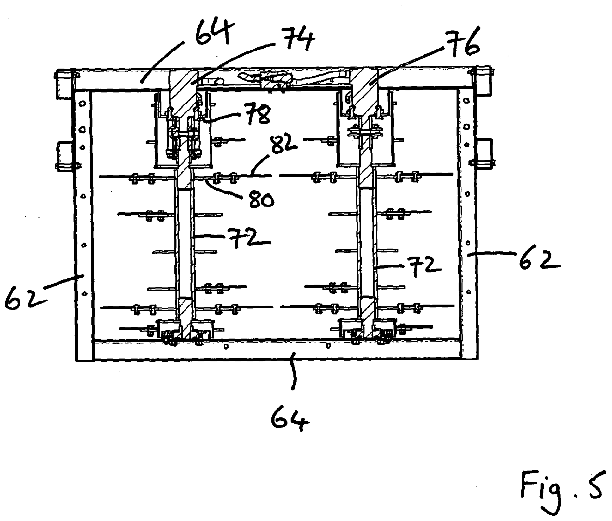

A cutaway view of the spreader head 16 is shown in Fig. 5 and from this the motors 74, 76 can be seen encased within larger diameter sections of the shafts 72. This enables mounting of rotors all the way along the shafts providing better ejection of the bale while avoiding damage to the motors 74, 76. The motor 74 is coupled via an intermediate bearing 78 to the shaft 72 while motor 76 is directly mounted, showing that the motor bearing itself acts to journal the shaft, thereby saving additional weight.

Referring again to Fig. 1 a peaked lip 100 extends above the frame 60 of the spreader head, to prevent stray elements of bale flying out at an excessively large angle. In a further modification, deflector plates may be attached to the frame to cause the ejected material to be directed in a particular direction.

The various modifications disclosed herein are not limited in their application to the embodiments in connection with which they are described and may be generally applicable to all embodiments of the invention.

## Claims

1. Bale handling apparatus having:
a box frame which retains a bale of material;
a conveyor surface provided by a continuous conveyor belt (14), mounted on the box frame and upon which the bale rests, the conveyor belt (14) being operable to move the bale in a longitudinal direction towards a spreader head (16) that ejects bale material from the apparatus;
the conveyor belt (14) extending around at least two rollers (32, 34F) spaced apart in the longitudinal direction;
**characterised in that**:
(a) the apparatus further comprises a rectangular frame (20) located on the side of the apparatus by means of which the apparatus may be connected to a loader and a pair of horizontal support struts (30) forming part of the box frame and extending in a lateral direction at the base of the box frame, the support struts (30) providing additional strength for the apparatus to be carried transversely by the loader, and the support struts (30) extending parallel to the rollers (32, 34F) and inside the continuum of the conveyor belt (14); and
(b) a sequence of guide rollers (34) are provided within the continuum of the conveyor belt (14).

2. Apparatus according to claim 1 wherein the spreader head is mounted on the frame via a pair of lifting arms, actuable to lift the spreader head and thereby enable insertion of a bale within the frame and onto the conveyor surface.

3. Apparatus according to claim 2 wherein the lifting arms are mounted upon upper surfaces of the frame.

4. Bale handling apparatus according to any one of the preceding claims wherein the spreader head comprises a pair of rotating shafts upon which are mounted rotors, spaced-apart along the length of the shafts, the rotors comprising an elliptical, concentrically-mounted blade holder and at least one blade extending from the blade holder.

5. Bale handling apparatus according to any one of the preceding claims, wherein the spreader head is mounted to the frame via a pair of lifting arms, pivotally mounted to the frame and actuable to lift the spreader head to enable insertion of a bale in the frame.

6. Apparatus according to claim 5 wherein the lifting arms are mounted upon an upper surface of the frame.

7. Apparatus according to any one of the preceding claims wherein the end of the conveyor belt (14) adjacent the spreader head (16) is chamfered by location of the final guide roller (34F) below the height of the other rollers.

## Patentansprüche

1. Ballenhandhabungsgerät mit:
- einem Kastenrahmen, welcher einen Materialballen aufnimmt,
- einer Förderfläche, welche durch ein Endlosförderband (14) gebildet ist, welches an dem Kastenrahmen gelagert ist und auf welchem der Ballen ruht, wobei das Förderband (14) zum Bewegen des Ballens in einer Längsrichtung zu einem Streukopf (16) betreibbar ist, welcher Ballenmaterial aus dem Gerät auswirft,
- wobei das Förderband (14) sich um zumindest zwei Rollen (32, 34F) erstreckt, welche in einer Längsrichtung voneinander beabstandet sind,
**dadurch gekennzeichnet,**
(a) **dass** das Gerät weiter einen rechteckigen Rahmen (20), welcher an einer Seite des Geräts angeordnet ist, durch welche das Gerät mit einem Lader verbunden werden kann, und ein Paar horizontaler Tragholme (30) aufweist, welche einen Teil des Kastenrahmens bilden und sich in einer Seitenrichtung an der Basis des Kastenrahmens erstrecken, wobei die Tragholme (30) für eine zusätzliche Festigkeit des Gerätes sorgen, welches quer durch den Lader getragen wird, und wobei die Tragholme (30) sich parallel zu den Rollen (32, 34F) erstrecken und innerhalb des Umlaufraums des Förderbandes (14) erstrecken, und
(b) **dass** eine Reihe von Führungsrollen (34) innerhalb des Umlaufraums des Förderbandes (14) vorgesehen ist.

2. Vorrichtung nach Anspruch 1,
wobei der Streukopf an dem Rahmen über ein Paar von Hubarmen gelagert ist, welche betätigbar sind, um den Streukopf zu heben und hierdurch ein Einführen eines Ballens in den Rahmen und auf die Förderfläche zu ermöglichen.

3. Vorrichtung nach Anspruch 2,
wobei die Hubarme auf Oberseiten des Rahmens gelagert sind.

4. Ballenhandhabungsgerät nach einem der vorhergehenden Ansprüche,
wobei der Streukopf ein Paar von rotierenden Wellen aufweist, auf welchen Rotoren gelagert sind, welche beabstandet zueinander entlang der Länge der Wellen angeordnet sind, wobei die Rotoren einen elliptischen, konzentrisch gelagerten Blatthalter und zumindest ein Blatt aufweisen, welches sich von dem Blatthalter weg erstreckt.

5. Ballenhandhabungsgerät nach einem der vorhergehenden Ansprüche,
wobei der Streukopf an dem Rahmen über ein Paar von Hubarmen gelagert ist, welche schwenkbar an dem Rahmen gelagert und betätigbar sind, um den Streukopf anzuheben, um ein Einführen eines Ballens in den Rahmen zu ermöglichen.

6. Gerät nach Anspruch 5,
wobei die Hubarme an Oberseiten des Rahmens angeordnet sind.

7. Gerät nach einem der vorhergehenden Ansprüche,
wobei das dem Streukopf (16) benachbarte Ende des Förderbandes (14) durch Anordnung der abschließenden Führungsrolle (34F) unterhalb der Höhe der anderen Rollen angeschrägt ist.

## Revendications

1. Dispositif de manutention de baies comprenant :
un châssis forme de boite retenant une bale de matière ;
une surface de transport munie d'une courroie de convoyeur continue (14) montée sur le châssis en forme de boite er sur laquelle repose la bale, la courroie de convoyeur (14) pouvant être mise en oeuvre pour déplacer la bale dans une direction longitudinale vers une tête d'épandage (16) qui éjecte la matière de la baie,
la courroie de convoyeur (14) s'étendant autour d'au moins deux rouleaux (32,34F) espacés l'un de l'autre en direction longitudinale
**caractérisé en ce que**
(a) le dispositif comporte en outre un châssis rectangulaire (20) situé sur le côté du dispositif au moyen duquel le dispositif peut être relié à un chargeur et une paire d'entretoises du support horizontal (30) faisant partie du châssis en forme de boite et s'étendant en direction latérale à la base du châssis en forme de boite, les entretoises de support (30) fournissant une solidité additionnelle au dispositif pour que celui-ci soit porté par le chargeur transversalement et las entretoises de support (30) s'étendant parallèlement aux rouleaux (32,34F) à l'intérieur de la courroie du convoyeur (14) et
(b) une série de rouleaux de guidage (34) étant disposée à l'intérieur de la courroie de convoyage (14).

2. Dispositif selon la revendication 1 dans lequel la tête d'épandage est montée sue le châssis au moyen d'une paire de bras de levage mis en oeuvre pour soulever la tête d'épandage ce qui rend possible l'introduction d'une bale à l'intérieur du châssis et sur la surface du convoyeur.

3. Dispositif selon la revendication 2 dans lequel les bras de levage sont montés sur les surfaces supérieures du châssis.

4. Dispositif de manutention de baies selon l'une quelconque des revendications précédentes dans lequel la tête d'épandage comporte une paire d'arbres rotet-ifs sur lesquels sont montés des rotors espacés les uns des autres le long de ces arbres les rotors comportant un support de lame elliptique monté de façon centrale et au moins une lame s'étendant depuis le support de lame.

5. Dispositif de manutention de baies selon l'une quelconque des revendications précédentes dans lequel la tête d »épandage est montée sur la châssis au moyen d'une paire de bras de levage montés à pivotement sur le châssis et pouvant être mis en oeuvre pour soulever la tête d'épandage de façon à rendre possible l'introduction d'une bale dans le châssis.

6. Dispositif selon la revendication 5 dans lequel es bras de levage sont montés sur une surface supérieure du châssis.

7. Dispositif selon l'une quelconque des revendications précédentes dans lequel l'extrémité de la courroie de convoyage (14) adjacente à la tête d'épandage (16) est chanfreinée par la mise en place du rouleau de guidage final (34F) en dessous de la hauteur des autres rouleaux .
